# EUROPÄISCHE PATENTANMELDUNG

(11) **EP 0 771 983 A2**
(43) Veröffentlichungstag der Anmeldung: **07.05.1997**
(21) Anmeldenummer: 96117305.1
(22) Anmeldetag: 28.10.1996
(51) Int. Cl.: F16K 37/00

(54) **Positionsanzeigeeinrichtung eines Ventils**

(30) Priorität: 31.10.1995 DE 29517256 U
(71) Anmelder: GEMÜ Gebrüder Müller Apparatebau GmbH & Co. KG, 74653 Ingelfingen (DE)
(72) Erfinder: Müller, Fritz, 74653 Ingelfingen 2 (DE)
(74) Vertreter: Hering, Hartmut, Dipl.-Ing.

(57) **Zusammenfassung**

Es wird ein Ventil mit einem über ein Stellglied in einem Gehäuse bewegbaren Ventilelement (4) angegeben, welches mittels einer Verstelleinrichtung in Richtung auf einen Ventilsitz (7) zu und von diesem weg bewegbar ist. Ferner ist eine Positionsanzeigeeinrichtung (12) vorgesehen. Diese Positionsanzeigeeinrichtung (12) umfaßt ein transparentes Fenster (11) und das Stellglied (8) und/oder das Ventilelement (4) und/oder ein Zwischenstück (Druckstück 6) als Anzeigeelement.

Diese Ventilauslegung, welche insbesondere für ein Handventil bestimmt ist, gestattet, daß unmittelbar die Stellung eines entsprechend bewegbaren Elements des Ventils über das zugeordnete transparente Fenster (11) im Gehäuse (2, 3) zur Anzeige gebracht wird. Somit erhält man eine zuverlässige und genaue Direktanzeige der Ventilpositionen. Am oder in der Nähe des Fensters (11) können Markierungen für die Offen- und/oder Schließstellung des Ventils angebracht sein.

## Beschreibung

Die Erfindung befaßt sich mit Ventilen, welche eine Positionsanzeigeeinrichtung haben.

Üblicherweise umfaßt ein Ventil ein über ein Stellglied an einem Gehäuse bewegbares Ventilelement, welches mittels einer Verstelleinrichtung in Richtung auf einen Ventilsitz zu und von diesem weg bewegbar ist. Für die Stellung des Ventils bzw. des Ventilelements kann eine Positionsanzeigeeinrichtung vorgesehen sein.

Die Erfindung zielt darauf ab, ein Ventil bereitzustellen, welches auf konstruktiv einfache und zuverlässige Weise eine Positionsanzeige gestattet.

Nach der Erfindung wird hierzu ein Ventil mit einem über ein Stellglied in einem Gehäuse bewegbaren Ventilelement, welches mittels einer Verstelleinrichtung in Richtung auf einen Ventilsitz zu und von diesem weg bewegbar ist, und mit einer Positionsanzeigeeinrichtung bereitgestellt, welches sich dadurch auszeichnet, daß die Positionsanzeigeeinrichtung ein transparentes Fenster im Gehäuse und das Stellglied und/oder das Ventilelement und/oder ein Zwischenstück als Anzeigeelement umfaßt.

Bei der erfindungsgemäßen Ventilauslegung, welche insbesondere für Handventile bestimmt ist, wird somit unmittelbar die Stellung eines entsprechend bewegbaren Elements des Ventils über ein zugeordnetes transparentes Fenster im Gehäuse zur Anzeige gebracht. Hierdurch können komplizierte zusätzliche Einrichtungen, welche mit dem Stellglied und/oder dem Ventilelement und/oder einem Zwischenstück hiervon verbunden sind, entfallen, und es ist eine Direktanzeige der Ventilposition über das zugeordnete sich bewegende Teil möglich, welche äußerst zuverlässig und genau sowie ohne Betriebsstörungen möglich ist. Auch bei Ausfall von gegebenenfalls vorgesehenen elektrischen oder elektronischen Einrichtungen kann auf diese Weise die Ventilstellung immer genau erfaßt werden.

Vorzugsweise ist das Fenster in Höhe eines Druckstücks im Gehäuse angeordnet, welches eine Ventilmembrane beaufschlagt und mit dem Stellglied verbunden ist. Bei einem solchen sogenannten Membranventil beaufschlagt das Druckstück direkt die Ventilmembrane, so daß die Positionsanzeige im Endeffekt der Ventilmembranbeaufschlagung unmittelbar entspricht, ohne daß Totgangbewegungen bei zugeordneten Stellgliedern berücksichtigt zu werden brauchen.

Gemäß einer bevorzugten Ausführungsform des Ventils umfaßt das Gehäuse ein Oberteil und ein Unterteil, zwischen denen die Ventilmembrane angeordnet ist. In diesem Fall wird das transparente Fenster vorzugsweise im Oberteil des Gehäuses, insbesondere unter Zuordnung zu dem Druckstück, angeordnet.

Um die Ablesbarkeit der Anzeigeeinrichtung zu erleichtern, sind am oder in der Nähe des Fensters Markierungen angebracht, welche der Offen- und/oder Schließstellung des Ventils zugeordnet sind.

Gemäß bevorzugten Ausführungsformen des Ventils ist das Stellglied eine Stellspindel, welche längsbeweglich im Gehäuse geführt ist.

Insbesondere kann die Betätigungseinrichtung von einer Betätigungshandhabe, beispielsweise einem Handrad, gebildet werden, mittels welchem das Stellglied bzw. die Stellspindel zur Bewegung des Ventilelements betätigt wird. Insbesondere für sogenannte Handventile ist die Positionsanzeigeeinrichtung nach der Erfindung vorteilhaft, da man die Stellung des Ventils nicht über die Stellung der Betätigungshandhabe, wie des Handrads, in Erfahrung bringen muß, sondern daß man eine zuverlässige und genaue Positionsanzeige für die Stellung des Ventils ohne jegliche Veränderung der jeweils eingestellten Position erhält.

Natürlich ist die Erfindung nicht auf die voranstehend als bevorzugt angegebenen Ventilbauarten beschränkt, sondern es sind zahlreiche Abänderungen und Modifikationen möglich, so daß das Fenster am Gehäuse auch an einer solchen Stelle angebracht werden kann, welche beispielsweise dem Stellglied zugeordnet ist, wobei das Stellglied gegebenenfalls Sichtmarkierungen tragen kann. Wesentlich bei der erfindungsgemäßen Auslegung ist vielmehr die Tatsache, daß man auf eine konstruktiv einfache Weise eine zuverlässige Positionsanzeige weitgehend ohne Zwischenübertragungsmittel für das Ventil bereitstellt.

Die Erfindung wird nachstehend an Hand einer bevorzugten Ausführungsform unter Bezugnahme auf die beigefügte Zeichnung näher erläutert.

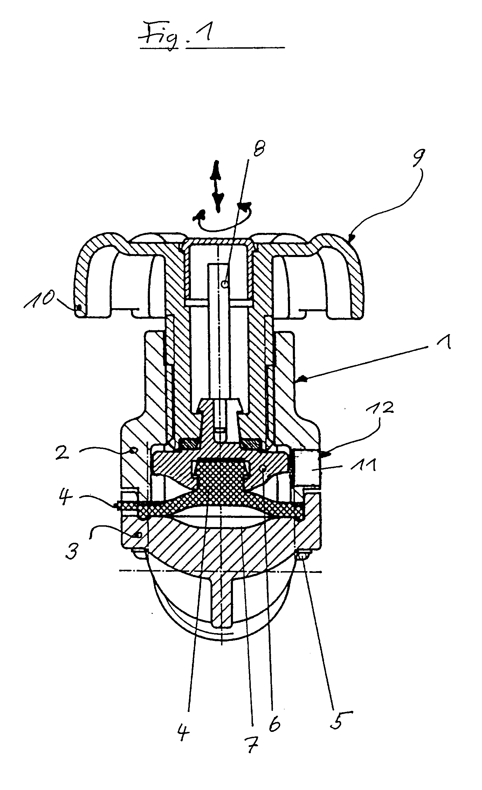

In der einzigen Figur 1 der Zeichnung ist schematisch in einer Schnittdarstellung ein Handventil dargestellt, welches als Membranventil ausgebildet ist. Hierbei handelt es sich aber lediglich um eine bevorzugte Ausführungsform, so daß die nach der Erfindung wesentlichen Einzelheiten auch bei anderen Ventilbauarten verwirklicht werden können.

Wie aus Figur 1 zu ersehen ist, umfaßt ein insgesamt mit 1 bezeichnetes Gehäuse ein Gehäuseoberteil 2 und ein Gehäuseunterteil 3. Diese Gehäuseteile 2, 3 können aus einem geeigneten Kunststoffmaterial oder anderen Materialien, beispielsweise auch aus Metall hergestellt sein. Bei der in Figur 1 dargestellten Membranventil-Bauart ist zwischen den beiden Gehäuseteilen 2, 3 über eine flanschähnliche Verbindung eine Ventilmembrane 4 eingespannt, welche das Ventilelement bildet. Die beiden Gehäuseteile 2, 3 können beispielsweise mittels Schraubverbindungen 5 fest miteinander verbunden sein. Die Ventilmembrane 4 wird durch ein Druckstück 6 beaufschlagt, so daß die Ventilmembrane 4 in Richtung auf einen Ventilsitz 7 zu und von diesem weg bewegbar ist. Das Druckstück 6 ist mit einem Stellglied 8, beispielsweise einer Stellspindel, verbunden. Das Stellglied 8 seinerseits ist mit einer Betätigungseinrichtung 9 verbunden, welche beim dargestellten Beispiel von einer Betätigungshandhabe 10 in Form eines Handrads gebildet wird.

In Höhe des Druckstücks 6 und unter Zuordnung zu diesem ist im Gehäuse 1 bzw. im Gehäuseoberteil 2 ein transparentes Fenster 11 vorgesehen. Dieses transparente Fenster 11 ist in das Gehäuseoberteil 2 eingelassen und integriert. Obgleich es nicht näher dargestellt ist, können an oder in der Nähe des Fensters 11 Markierungen vorgesehen sein, welche jeweils beispielsweise der vollständig offenen Stellung und/oder der vollständig geschlossenen Stellung des Ventils zugeordnet sind. Gegebenenfalls können entsprechende Markierungen auf dem Außenumfang des Druckstücks 6, welches bei der dargestellten Ausführungsform ein Zwischenstück bildet, vorgesehen sein. Das transparente Fenster 11 und das zugeordnete Stellglied, wie beim dargestellten Anwendungsbeispiel das Druckstück 6, bilden zusammen eine Positionsanzeigeeinrichtung 12.

Mit Hilfe der Positionsanzeigeeinrichtung 12 kann eine Bedienungsperson direkt die Ventilstellung über die entsprechende Stellung des Stellglieds, wie des Druckstücks 6, ablesen und erfassen. Somit kann die Bedienungsperson unmittelbar die Position des Ventils auf zuverlässige Weise erkennen und gegebenenfalls Verstellungen vornehmen. Auch gestattet die Positionsanzeigeeinrichtung 12, daß eine Bedienungsperson genau auch Zwischenstellungen des Ventilelements, wie der Ventilmembrane 4, erkennen kann, so daß auf einfache Weise auch Durchflußmengenregelungen hierbei vorgenommen und eingestellt werden können. Hierzu können dann bedarfsabhängig entsprechende Markierungen bei der Positionsanzeigeeinrichtung 12 vorgesehen sein.

Natürlich ist die Erfindung nicht auf die voranstehend beschriebenen Einzelheiten der bevorzugten Ausführungsform beschränkt, sondern es sind zahlreiche Abänderungen und Modifikationen möglich, die der Fachmann im Bedarfsfall treffen wird, ohne den Erfindungsgedanken zu verlassen. Insbesondere kann das transparente Fenster 11 auch einem anderen, das Ventilelement des Ventils beaufschlagenden Teil zugeordnet sein. Wesentlich ist, daß man mit Hilfe der Positionsanzeigeeinrichtung 12 eine direkte und unmittelbare Erfassung der Ventilstellung bewerkstelligen kann.

### Bezugszeichenliste

- 1: Gehäuse
- 2: Gehäuseoberteil
- 3: Gehäuseunterteil
- 4: Ventilmembrane
- 5: Schraubverbindung
- 6: Druckstück
- 7: Ventilsitz
- 8: Stellglied
- 9: Betätigungseinrichtung
- 10: Betätigungshandhabe in Form eines Handrads
- 11: Transparentes Fenster
- 12: Positionsanzeigeeinrichtung insgesamt

## Patentansprüche

1. Ventil mit einem über ein Stellglied in einem Gehäuse bewegbaren Ventilelement, welches mittels einer Verstelleinrichtung in Richtung auf einen Ventilsitz zu und von diesem weg bewegbar ist, und mit einer Positionsanzeigeeinrichtung, **dadurch gekennzeichnet**, daß die Positionsanzeigeeinrichtung (12) ein transparentes Fenster (11) und das Stellglied (8) und/oder das Ventilelement (4) und/oder ein Zwischenstück (Druckstück 6) als Anzeigelement umfaßt.

2. Ventil nach Anspruch 1, **dadurch gekennzeichnet**, daß das Fenster (11) in Höhe eines Druckstücks (6) im Gehäuse (1) angeordnet ist, welches eine Ventilmembrane (4) beaufschlagt und mit dem Stellglied (8) verbunden ist.

3. Ventil nach Anspruch 2, **dadurch gekennzeichnet**, daß das Gehäuse (1) ein Oberteil (2) und ein Unterteil (3) umfaßt, zwischen denen die Ventilmembrane (4) angeordnet ist, und daß das Fenster (11) im Oberteil (2) des Gehäuses (1) angeordnet ist.

4. Ventil nach einem der Ansprüche 1 bis 3, **dadurch gekennzeichnet**, daß am oder in der Nähe des Fensters (11) Markierungen für die Offen- und/oder Schließstellung des Ventils angebracht sind.

5. Ventil nach einem der vorangehenden Ansprüche, **dadurch gekennzeichnet**, daß das Stellglied (8) eine Stellspindel ist.

6. Ventil nach einem der vorangehenden Ansprüche, **dadurch gekennzeichnet**, daß die Betätigungseinrichtung (9) eine Betätigungshandhabe (10) ist.

7. Ventil nach Anspruch 6, **dadurch gekennzeichnet**, daß die Betätigungshandhabe (10) ein Handrad ist.
